# EUROPEAN PATENT APPLICATION

(11) **EP 1 696 335 A1**
(43) Date of publication of application: **30.08.2006**
(21) Application number: 04732749.9
(22) Date of filing: 13.05.2004
(51) Int. Cl.: G06F 15/00, G06F 1/00

(54) **UNAUTHORIZED OPERATION JUDGMENT SYSTEM, UNAUTHORIZED OPERATION JUDGMENT METHOD, AND UNAUTHORIZED OPERATION JUDGMENT PROGRAM**

(30) Priority: 17.11.2003 JP 2003387213
(71) Applicant: Intelligent Wave Inc., Tokyo 104-0033 (JP)
(72) Inventor: AOKI, Osamu, Minami, Suginami-ku, Tokyo 166-0004 (JP); SHIRASUGI, Masaharu, Tokyo 135-0043 (JP); KOIDE, Kenichi, Edogawa-ku, Tokyo 134-0085 (JP); KAWANO, Hiroaki, Chiba-shi, Chiba 261-0003 (JP)
(74) Representative: Grünecker, Kinkeldey, Stockmair & Schwanhäusser Anwaltssozietät
(86) International application number: PCT/JP2004/006440
(87) International publication number: WO 2005/048119

(57) **Abstract**

There is provided an unauthorized-operation-judgment system for judging whether an operation received by a computer is an unauthorized operation by referencing a profile to find a peculiar action. This system can cope with an unauthorized operation due to a change of a computer by an authorized user and an unauthorized operation by a new user whose user profile is not yet created. When a user executes a certain operation, the operation tendency and the operation tendency executed by the user are learned to create a node profile and a user profile, which are stored in a node-profile-state table and a user-profile-state table of each user, respectively. The node profile and the user profile thus created are referenced so as to perform deviation calculation between the operation received and the normal operation pattern, thereby judging whether the operation is peculiar and calculating the possibility of an unauthorized operation as a score value.

## Description

### BACKGROUND OF THE INVENTION

### Field of the Invention:

This invention relates to an unauthorized-operation-judgment system, unauthorized-operation-judgment method and unauthorized-operation -judgment program for determining whether an operation received by a computer is an unauthorized operation.

### Description of the Related Art:

Various techniques have been provided for preventing damage due to unauthorized operation of a computer such as unauthorized acquisition of information stored on a computer, unauthorized access to a network from a computer, and the like. For example, methods of verifying authorization for operation using an ID and password are widely used, however, in this kind of method it is not possible to prevent unauthorized operation by an authorized person having an ID and password, or by a third party who has improperly obtained an ID and password.

In order to handle these kinds of problems, typically judgment has been performed on a rule basis by registering operation patterns for which there is a high possibility that the operation is an unauthorized operation as rules, then comparing operations received by a computer against these rules to determine the possibility that an operation is an unauthorized operation. For example, a technique has been disclosed (see patent document 1) in which in the case of data that is transmitted over a network, pre-determined rules for the access right, transmission source, type of document being transmitted and the like are referenced, and when it is detected that there is a possibility that the operation is unauthorized, communication is stopped. However, in judgment on a rule basis, problems exist in that in the case of an operation for an unauthorized intention, as long as the operation is within the range of the rules, it is not judged as being an unauthorized operation; or when an unauthorized operation is executed that does not correspond to rules that were registered in the past using a completely different method, this cannot be detected.

Therefore, methods have also been invented in which, noticing that unauthorized operation differs from everyday operation, and is an operation that occurs unusually at certain timing, a profile is created in which behavior patterns of users are set from a log of operations of the computer, and when an operation is received by the computer, it is compared against the profiles, and the possibility that the operation is an unauthorized operation is determined. For example, a technique (see patent document 2) has been disclosed in which profiles are created from users' use of a network and unauthorized access of the network is detected, and a technique (see patent document 3) has been disclosed in which the contents of everyday operations are registered from an operation log of a computer, and an operation is determined to be an unauthorized operation when the operation does not correspond to these.
Patent document 1: Japanese Patent Appl ication Laid-open No. 2002-232451
Patent document 2: Japanese Patent Application Laid-open No. 2002-135248
Patent document 3: Japanese Patent Application Laid-open No. 2002-258972

In both of the inventions disclosed in the aforementioned patent document 2 and patent document 3, operation patterns of the computer are set in units of computer users. For example, often in the case of a computer at a business that is used for business purposes, a plurality of accounts are set up on one computer, and use of that computer is shared among a plurality of users, so it is preferable that profiles to be used as the criteria for determining unauthorized use be set in user units. However, the following problems exist in the method of using profiles in user units.

First, in the case of performing judgment of unauthorized operation by a management server that is connected to a plurality of computers by a network, as long as a user performs operation within the range of his or her own profile, the operation is determined to be a proper operation even though operation is performed on a computer that is different than the computer normally used. When that user uses a computer that is not normally used on the same network in order to perform some kind of unauthorized operation, for example, when an employee who has authorization to handle accounting data at the company headquarters performs an operation using accounting data on a computer in a warehouse that is not normally used, even though there is a possibility that the operation is unusual and is unauthorized, it is not possible to determine from just a user profile that the operation is an unauthorized operation.

Also, in the case of creating profiles in user units, when a new user account is setup on a specified computer, in order to create a highly reliable profile for the new user, it is necessary to accumulate an operation log for that user, and during that time, there is a problem in that it is not possible to perform effective judgment.

In order to handle these problems, it is preferable that profiles for determining unauthorized operation be set not only in user units, but also set in computer units as well, and that judgment be performed from both aspects. In order to perform judgment it is necessary that profiles be created efficiently in both computer units and user units as the computer receives various operations.

### SUMMARY OF THE INVENTION

Taking into consideration the aforementioned problems, the object of the present invention is to provide an unauthorized-operation-judgment system, unauthorized-operation-judgment method and unauthorized-operation-judgment program for determining whether operations received by a computer are unauthorized operations by referencing profiles in both computer units and user units.

In order to solve the aforementioned problems, this invention is an unauthorized-operation-judgment system for determining whether an operation received by a computer is an unauthorized operation, and comprises: an operation-receiving means for receiving instruction data for executing the operation; a first profile-creation means for creating a first profile from the instruction data related to the operation for which instruction data was received by the computer; a first profile-storage means for storing the first profile that was created by the first profile-creation means; a second profile-creation means for identifying the user that executed the operation by the instruction data, and creating a second profile related to the operation executed by the user; a second profile-storage means for storing, according to user, the second profiles created by the second profile-creation means; and a score-calculation means for comparing the instruction data with at least one profile that is stored in the first profile-storage means or in the second profile-storage means, and calculating a score for determining whether the operation is an unauthorized operation.

In this invention, profiles are created from operations received by a computer based on computer units and user units respectively, then stored, and by comparing newly received operations with the corresponding profiles to determine whether the operation is an unauthorized operation, it is not only possible to determine whether the operation is peculiar based on the user, but is also possible to determine whether operation is peculiar for that computer. Therefore, this invention can handle the case in which an authorized user performs an unauthorized operation on a different computer, as well as the case in which an unauthorized operation is performed by a user for which a user profile has not yet been created.

When creating profiles, an operation from a specific user is identified by the user ID of the user that is logged in when the operation is received, or by a user ID that is included in instruction data for the received operation, and a profile can be created in user units from the operation for the identified user that is logged in to the computer. When creating profiles in computer units, profiles can be created for just operations that are performed when the user is not logged in, or profiles can be created for all operations, including those that are performed when the user is logged in.

Also this invention can comprise: a first log-data-storage means for storing log data of the computer; and a second log-data-storage means for storing log data according to users of the computer; wherein the first profile-creation means references the first log-data-storage means when creating the first profile; and the second profile-creation means references the second log-data-storage means when creating the second profile.

Profiles in computer units and profiles in user units define operation tendencies of the computer and user respectively, so when creating prof i I es it is possible to use log data, which is a history of past operations.

Moreover, this invention can comprise a login-detection means for executing a process for detecting whether a certain user is logged into the computer; wherein when the login-detection means detects that a certain user is logged in, the second profile-creation means creates a second profile related to the user. When the login-detection means does not detect that a certain user is logged in even though detection processing is executed, the first profile-creation means creates a first profile related to the computer. The login-detection means executes detection processing at specified intervals while the computer is in operation.

With this kind of construction, even when the operation to be used for creating a profile is not performed, it is possible to record a state that a certain user is using the computer at the instant that it is detected that the user is logged in, or to record a state that the computer is in operation in the case that it is not detected that a user is logged in, as an operation log. The operation log that is recorded in this way can be used when analyzing from the operating time the operation tendencies of the user or computer, and creating profiles.

Furthermore, the invention can also comprise: a third prof ile-creation means for creat ing a third profile related to an operat ion executed by a user that is identified as a first-time user, when the user executing the operation by the instruction data is identified as a first-time user operating the computer for the first time; and a third profile-storage means for storing third profiles that are created by the third profile-creation means; wherein the score-calculation means uses at least one profile that is stored in the third profile-storage means instead of the second profile-storage means to determine whether the operation is an unauthorized operation. The invention can also comprise: an operation-record-storage means for storing, according to user, totals related to at least one of the following: number of logins to the computer, operation time that the computer has been operated, or number of days the computer has been operated; and a first-time-user-judgment means for referencing the operation-record-storage means, and determining that the user executing the operation is a first-time user using the computer for the first time when the totals do not satisfy preset reference values; and wherein the third profile-creation means creates a third profile for an operation executed by a user that is determined to be a first-time user by the first-time-user-judgment means; and the score-calculation means uses at least one profile stored in the third profile-storage means when the first-time-user-judgment means determines that a user is a first-time user, to determine whether the operation is an unauthorized operation.

In the case of a first-time user that is using a computer for the first time and for which a user profile has not yet been created, it is possible to perform general unauthorized-operation judgment from profiles for the computer being operated, however, with this kind of construction, by further performing a comparison with the general operation tendencies of the first-time user, it is possible to perform even more accurate unauthorized-operation judgment. Users that can be treated as first-time users can be limited to users that are using the computer for the very first time, or it is also possible to use a general first-time user profile for the second time and more until an adequate user profile can be created. In addition to the very first time, it is possible to set rules for the period that the first-time user profile can be used, such as specifying a number of logins, specifying the operation time (for example, a total of 99 login hours), specifying the number of operation days (for example, a period of 10 days starting from the first operation), etc.

Also, in this invention, the score calculation means can calculate a score by calculating the deviation between the instruction data and data that is stored in the profiles.

Furthermore, this invention can comprise an operation-stopping means for executing a process for stopping the operation when the score value exceeds a reference value. The invention can also comprise a warning-process means for executing a process for displaying a warning on the operation screen of the computer, or generating a warning alarm on the computer when the score exceeds a reference value. Also, the invention can comprise a warning-notification-transmission means for sending a notification warning to the administration server operated by the administrator of the computer that there is a possibility of an unauthorized operation, when the score exceeds a reference value.

In this way, it is possible to calculate a score by calculating the deviation between instruction data for a received operation and a profile of general operation tendencies, and determining whether or not the operation is an unauthorized operation can be performed according to whether or not the score value exceeds a specified reference value. When it is determined that an operation is an unauthorized operation, it is possible to stop that operation, display a warning screen on the computer, or sound an warningalarm. It is also possible to notify the administrator via a network that an unauthorized operation has occurred.

The present invention can also be realized as a unauthorized-operation-judgment method that uses the respective forms of construction of the unauthorized-operation-judgment system explained above. The invention could also be realized as an unauthorized-operation-judgment program that uses the respective forms of construction of the unauthorized-operation-judgment system. The procedure for the aforementioned unauthorized-operation-judgment method and unauthorized-operation-judgment program differs depending on whether the unauthorized-operation judgment is performed using a profile that is stored in the computer, or whether the judgment is performed using a profile that is stored in another computer that is connected via a network.

In other words, a first unauthorized-operation-judgment method of the invention is an unauthorized-operation-judgment method for determining whether an operation received by a computer is an unauthorized operation, and comprising: a step whereby the computer receives instruction data to execute the operation; a step whereby the computer creates a first profile related to the operation for which instruction data was received by the computer, and stores the first profile in a first profile-storage unit; a step whereby the computer identifies the user that executed the operation by the instruction data, creates a second profile related to the operation executed by the user and stores the profile in a second profile-storage unit; and a step whereby the computer compares the instruction data with at least one profile that is stored in the first profile-storage unit or in the second profile-storage unit, and calculates a score for determining whether the operation is an unauthorized operation.

A second unauthorized-operation-judgment method of the invention is an unauthorized-operation-judgment method for determining whether an operation received by a computer is an unauthorized operation, and comprising: a step whereby the computer receives instruction data for executing the operation; a step whereby the computer creates a first profile related to the operation for which the instruction data is received by the computer, and sends the profile to a first profile-storage unit; a step whereby the computer identifies the user that executed the operation by the instruction data, creates a second profile related to the operation executed by the user, and sends the profile to a second profile-storage unit; and a step whereby the computer obtains at least one profile from the first profile-storage unit or the second profile-storage unit, compares the instruction data with the profile(s), and calculates a score for determining whether the operation is an unauthorized operation.

Also, a first unauthorized-operation-judgment program of the invention is an unauthorized-operation-judgment program for determining whether an operation received by a computer is an unauthorized operation, and causes the computer to execute: a step of receiving instruction data for executing the operation; a step of creating a first profile related to the operation for which instruction data was received by the computer, and storing the first profile in a first profile-storage unit; a step of identifying the user that executed the operation by the instruction data, creating a second profile related to the operation executed by the user and storing the profile in a second profile-storage unit; and a step of comparing the instruction data with at least one profile that is stored in the first profile-storage unit or in the second profile-storage unit, and calculating a score for determining whether the operation is an unauthorized operation.

Moreover, a second unauthorized-operation-judgment program of the invention is an unauthorized-operation-judgment program for determining whether an operation received by a computer is an unauthorized operation, and causes the computer to execute: a step of receiving instruction data for executing the operation; a step of creating a first profile related to the operation for which the instruction data is received by the computer, and sending the profile to a first profile-storage unit; a step of identifying the user that executed the operation by the instruction data, creating a second profile related to the operation executed by the user, and sending the profile to a second profile-storage unit; and a step of obtaining at least one profile from the first profile-storage unit or the second profile-storage unit, comparing the instruction data with the profile(s), and calculating a score for determining whether the operation is an unauthorized operation.

### Effect of the Invention:

With this invention, together with being able to determine whether or not a peculiar operation is an unauthorized operation for a computer that is unable to perform the determination on a rule basis, it is also possible to perform judgment from peculiar operation based not only on the user, but also from peculiar operation of the computer. Therefore, it is possible to cope with cases in which an authorized user performs an unauthorized operation on a different computer or in which a new user for which a user profile has not yet been created performs an unauthorized operation, so it is possible to greatly increase the security of a computer against unauthorized operation.

### BRIEF DESCRIPTION OF THE DRAWINGS

FIG. 1 is a drawing showing an overview of the unauthorized operation judgment system of the invention.
FIG. 2 is a block diagram showing a first embodiment of the unauthorized operation judgment system of the invention.
FIG. 3 is a block diagram showing a second embodiment of the unauthorized operation judgment system of the invention.
FIG. 4 is a block diagram showing the construction of the unauthorized operation judgment system of the invention.
FIG. 5 is a drawing showing a first pattern for creating node profiles and user profiles by the unauthorized operation judgment system of the invention.
FIG. 6 is a drawing showing a second pattern for creating node profiles and user profiles by the unauthorized operation judgment system of the invention.
FIG. 7 is a flowchart showing the flow of the unauthorized operation judgment system of the invention.

### DESCRIPTION OF THE PREFERRED EMBODIMENTS OF THE INVENTION

The preferred embodiments of the invention will be explained in detail below using the drawings. In the explanation below, determining unauthorized operation will be mainly explained for an example of a computer that is connected to a network, however, this is just one example of an embodiment of the invention, and the invention is not limited by this embodiment, and could just as well be applied to a computer that is used as a stand alone computer,

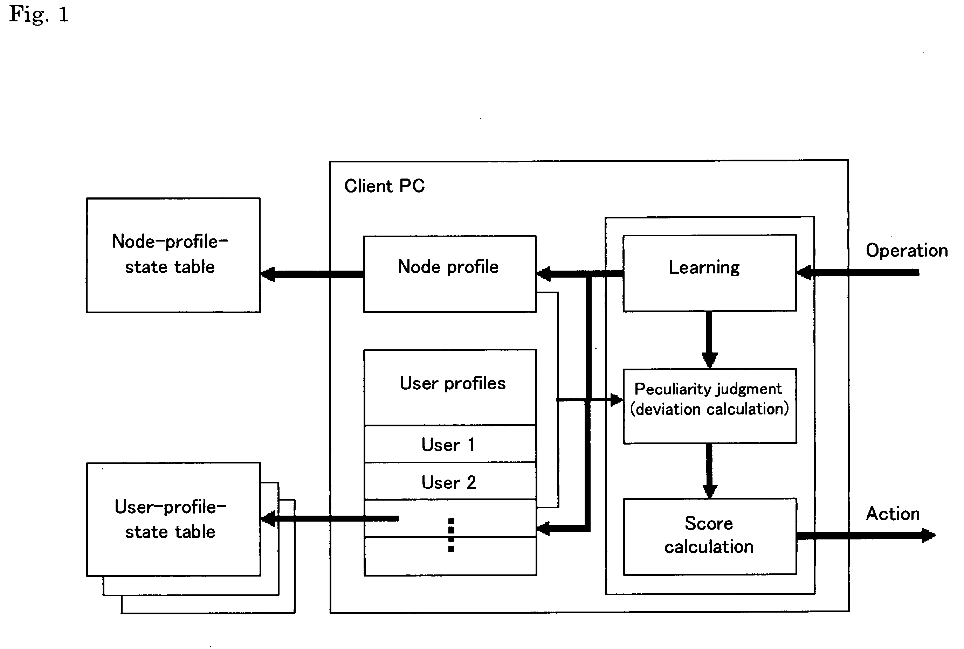

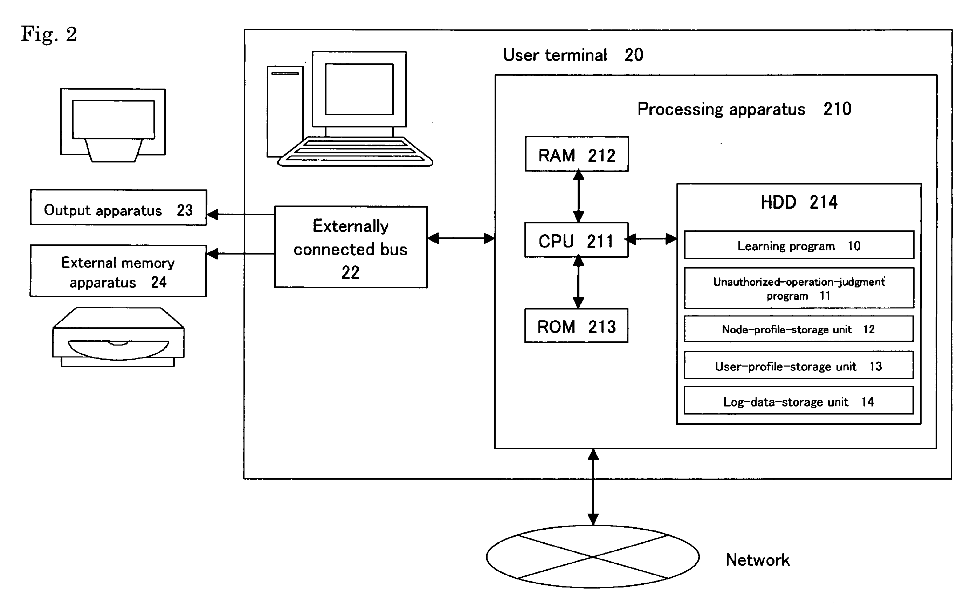

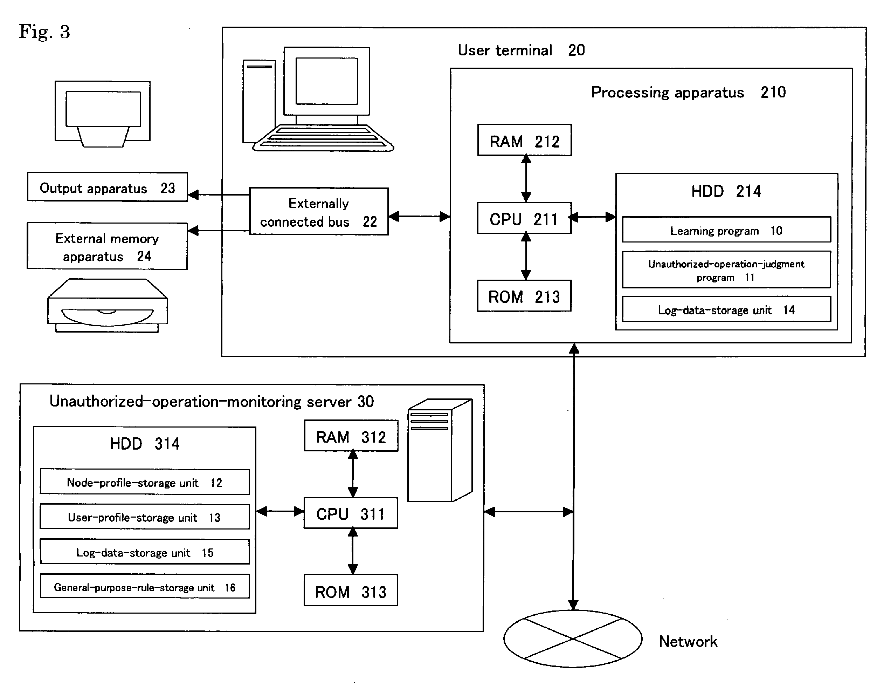

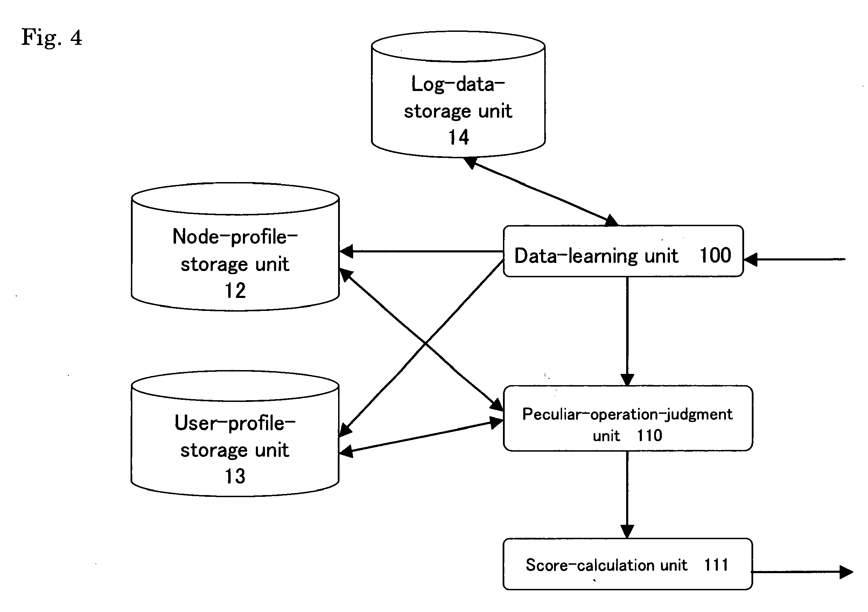

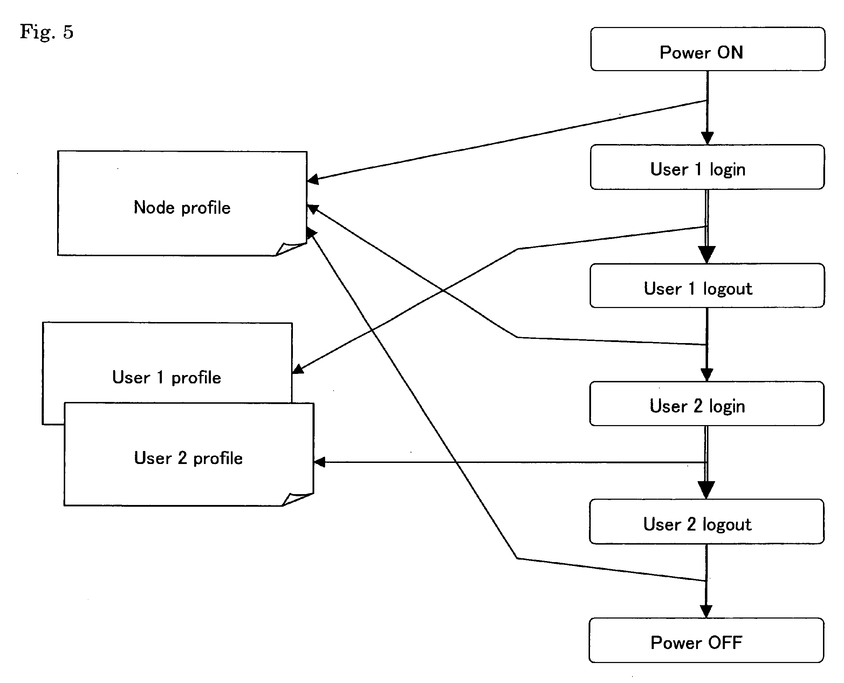

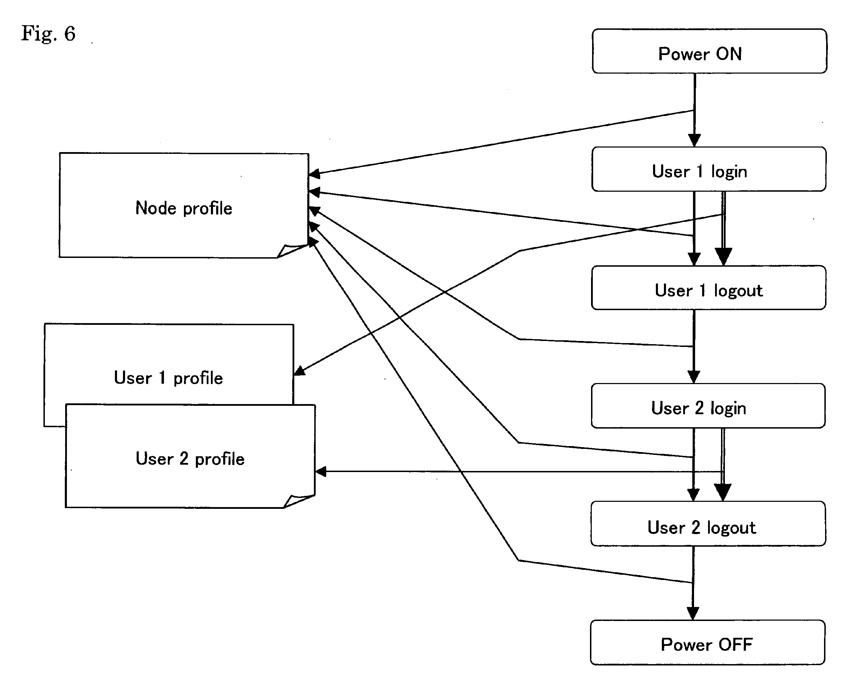

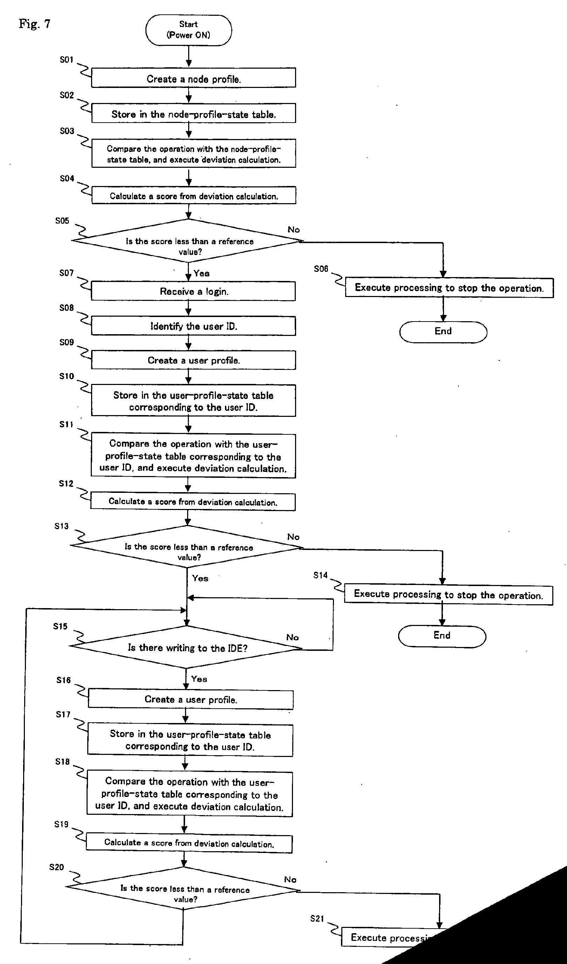

FIG. 1 is a drawing showing an overview of the unauthorized operation judgment system of the invention. FIG. 2 and FIG. 3 are block diagrams that respectively show a first and second embodiment of the unauthorized operation judgment system of the invention. FIG. 4 is a block diagram showing the construction of the unauthorized operation judgment system of the invention. FIG. 5 and FIG. 6 are drawings respectively showing a first and second pattern for creating node profiles and user profiles by the unauthorized operation judgment system of the invention. FIG. 7 is a flowchart showing the flow of the unauthorized operation judgment system of the invention.

An overview of the unauthorized operation judgment system of the invention will be explained using FIG. 1. In the example shown in FIG. 1, the unauthorized operation judgment system of the invention is instal led in a client PC that is connected to a network. The client PC is used by a plurality of users, and accounts are setup corresponding to each user.

When a user executes some kind of operation on the client PC, that client PC learns the tendency of the operations received and the tendency of the operations executed by that user, and creates a node profile and user profile. Of the profiles that are created in this way, node profiles are stored in a node-profile-state table, and user profiles are stored in user-profile-state tables for each user.

After a prof ile is created for an operation executed by a user, next, judgment is performed to determine whether that operation is an unusual operation. Judgment is executed by referencing the node profiles stored in the node-profile-state table, and the user profile for the corresponding user that is stored in the user-profile-state table and performing deviation calculation between that operation and a normal operation pattern. Depending on the contents of the operation, the tables that are referenced can be for both node profiles and user profiles, or can be for just one or the other.

The results of the deviation calculation are calculated as a score value that indicates the possibility that the operation may be an unauthorized operation. By setting a fixed reference value for the score value, it is possible to designate that a preset action be executed when the score value exceeds the reference value and there is a high possibility that the operation is an unauthorized operation, such as performing a process to interrupt the operation, displaying a warning on the display, sending a notification to the administrator or the like.

The unauthorized operation judgment system of this invention can be used when a computer is used as a stand alone, or when a computer is connected to a network and used. In the latter case, the client PC can perform unauthorized operation judgment on its own, or the client PC can perform unauthorized operation judgment in cooperation with an unauthorized operation monitoring server. FIG. 2 shows a first embodiment of the unauthorized operation judgment system of the invention in which a client PC performs unauthorized operation judgment on its own, and FIG. 3 shows a second embodiment of the unauthorized operation judgment system of the invention in which a client PC performs unauthorized operation judgment in cooperation with an unauthorized operation judgment server.

The unauthorized operation judgment system of the invention shown in FIG. 2 is instal led in the processing apparatus 210 of a user terminal 20, and it determines whether or not an operation received by the user terminal 20 is an unauthorized operation. The function of the unauthorized operation judgment system is executed by a learning program 10 and unauthorized operation judgment program 11 that are stored in the HDD 214 of the processing apparatus 210. It is possible to use another kind of memory medium that can store the programs, such as a flash memory or the like, instead of the HDD 214 of the processing apparatus 210.

First, after the power has been turned ON to the user terminal 20, various basic programs that are stored in ROM 213 are activated in order to perform hardware control, such as input and output control, and the operation system of the computer is read from the HDD 214 and activated. Also, together with this, the learning program 10 and unauthorized operation judgment program 11 are read from the HDD 214 and activated, and the CPU 211 performs computation using RAM 212 as a work area.

By taking events executed by some operations such as writing to IDE (Integrated Drive Electronics, interface standards between a personal computer and HDD, CD-ROM drive or the like), the learning program 10 and unauthorized operation judgment program 11 execute processing to learn and perform unauthorized operation judgment of the events. The learning program 10 and unauthorized operation judgment program 11 can also monitor data that is written to an externally connected bus 22, and execute a learning and unauthorized operation judgment process as an operation that is executed for an output apparatus 23 or external memory apparatus 24. The learning program 10 and unauthorized operation judgment program 11 can also monitor data that is sent to a network by the processing apparatus 210, and execute a learning and unauthorized operation judgment process for data that is sent or received over a network.

The learning process compares a received operation with log data that is stored in a log-data-storage unit 14, analyzes the tendency of the operation, creates profiles from the analysis results and stores a profile for the entire operation that does not identify the user of the user terminal 20 in a node-profile-storage unit 12, and stores a profile that identifies the user in a user-profile-storage unit 13. The unauthorized operation judgment process references the node-profile-storage unit 12 for general judgment of the user terminal 20, and references the user-prof ile-storage unit 13 for judgment of an individual user.

In this way, the node-profile-storage unit 12 and user-prof ile-storage unit 13 that store profiles to be used in unauthorized operation judgment can be located inside the user terminal 20, or as in the case of the second embodiment shown in FIG. 3, they can be located in the HDD 314 of an unauthorized operation judgment server 30 that is connected to the user terminal 20 over a network. The unauthorized operation judgment system of this invention can be used to perform judgment by using profiles as well as perform judgment on a general rule basis, however, in the second embodiment, a plurality of user terminals are connected to an unauthorized operation judgment server 30 that stores a large amount of profiles, and rules to be used for general purposes in a network can be created from these profiles and stored in a general-purpose-rule-storage unit 16. Also, it is not shown in the example of FIG. 3, however, the function of the learning program 10 and unauthorized operation judgment program 11 can be located on the side of the unauthorized operation judgment server 30 as well.

The relationship between each of the functions of the unauthorized operation judgment system of the invention will be explained using FIG. 4. First, when the user terminal 20 executes an operation, the data-learning unit 100 receives the data for executing that operation. The data-learning unit 100 references the log-data-storage unit 14 and creates a profile which will become the basis of the peculiar operation judgment.

When that operation is performed without logging into the user account, such as when turning ON or OFF the power supply, the data-learning unit 100 references general log data for the user terminal 20 in the log-data-storage unit 14 that does not identify the user, then creates a general profile for the user terminal 20 that does not identify the user and stores the profile in the node-profile-storage unit 12.

On the other hand, when the operation is an operation that is executed after logging into a certain user account, the data-learning unit 100 identifies the user corresponding to the account using a user ID or the like, and references the log for that user in the log-data-storage unit 14, then creates a profile identifying the user and stores that profile in a table related to that user in the user-profile-storage unit 13. When the same user executes a plurality of operations in the logged in state, the user is identified for each operation using the user ID that identified the user when logging in as a key, and a profile is created. When identifying a user, the user ID that identified the user when logging in can be stored in the computation area of the RAM 212 during the time that the user continues to be logged in, and when creating a profile this ID can be read, or, in the logged in state, it is also possible to attach a header, which identifies the user, to the instruction data that instructs that an operation be executed, and to identify the user with that header as a key. For an operation for which the user has been identified, when that operation is received by the same computer, it is also possible to create a general profile for the user terminal 20 that does not identify the user, and store it in the node-profile-storage unit 12.

Next, a peculiar-operation-judgment unit 110 references the corresponding profile to determine whether there is a possibility that the data for executing the operation is for an unauthorized operation. When the operation is an operation that does not identify the user, the profiles stored in the node-profile-storage unit 12 are referenced, and when the operation is an operation that identifies the user, the profile stored in the user-profile-storage unit 13 corresponding to that user is referenced, and judgment is performed to determine whether or not that operation is a peculiar operation.

The peculiar-operation judgment is performed by calculating the deviation between the received operation and the corresponding profile. It is possible to use various kinds of data that can be given a numerical value, such as the time schedule or criteria for the operation that is received, frequency of the operation, amount of data required for the process, or the like.

After the peculiar-operation-judgment unit 110 executes the deviation calculation, a score-calculation unit 111 calculates the possibility that the operation is an unauthorized operation as a score. The score can be set according to the amount of deviation from the profile that was calculated by deviation calculation, and by setting a fixed reference value for the calculated score, it is possible to determine that the operation is an unauthorized operation when the score is greater than the reference value, and then designate to execute a process to interrupt that operation.

The data-learning unit 100, peculiar-operation-judgment unit 110 and score-calculation unit 111 described above are not physically separated, but are included as a program for executing each of the processes in the learning program 10 or unauthorized-operation-judgment program 11 that are stored in the HDD 214, and they are read in order by the CPU 211 that executes computation using the RAM 212 as a work area.

Also, in the explanation above, peculiar-operation judgment is performed after an operation is received and learning has been performed, however, processing is not limited to this order, and it is also possible to perform learning for the operation after the operation has been received and peculiar-operation judgment has been performed; and then create a new profile.

Next, FIG. 5 and FIG. 6 will be used to explain in detail examples of two patterns of the procedure for creating node profiles and user profiles by the unauthorized-operation-judgment system of this invention. FIG. 5 is a drawing showing a first pattern for creating a node profile for an operation for which the user is not identified, and creating a user profile for an operation for which the user is identified. FIG. 6 is a drawing showing a second pattern for creating a node profile for all operations, and for creating a user profile for an operation for which the user is identified.

In the first pattern shown in FIG. 5, after the power to the computer has been turned ON and the operation system has been started up, the unauthorized-operation-judgment system of this invention is started. Here, the operation of turning ON the power to the computer is taken to be an event, and a profile related to the start-up time of the computer is created, however, at this time, the user is not logged in and cannot be identified, so a general profile related to that computer is created as a node profile.

Next, when the user 1 that started the computer logs in to his/her own account, the operation of the user 1 logging in is taken to be an event, and a profile related to that user 1 is created. It is possible to take various operations that are performed while the user 1 is logged in, such as starting up applications or operations, accessing a network, printing and the like as events, and from these events as well, profiles related to the user 1 are created. When the user 1 logs out, it is also possible to create a profile for the user 1 for the operation of logging out.

In the case that another operation such as turning ON/OFF the power is performed during the time after the user 1 has logged out until another user logs in, a node profile is created for that operation as an operation that does not identify the user. After that, when the user 2 logs in, a profile for that user 2 is created in the same way as was done for the user 1. The profile for the user 2 is distinguished from the profile for the user 1 by a user ID or the like, and is stored in a different table.

When determining whether an operation received by the computer is an unauthorized operation, according to the same classification as described above, a node profile is used when the user is not identified, and a user profile corresponding to the user is used when the user is identified. To identify the profiles that correspond to each of the users, it is possible to use a user ID or the like that is received at the time of login.

In the second pattern shown in FIG. 6, user profiles are created for each user for operations received in the state in which the user is identified, and a node profile, which does not identify users, is created for the computer as well. Even when the operation is an operation for which the user is identified, since that computer received the operation, all operations that are received after turning ON that computer until the computer is turned OFF can be the object of a node profile.

Also, even when operations that become the object of creating a profile are not yet executed, it is possible to use the fact that the state of the computer being turned ON, or that the state of an identified user being logged in is continuing for creating a profile. In order to do that, it is possible to activate a program for performing a process at a frequency of once every hour, for example, it is possible to detect whether the power is turned ON and whether an identified user is logged in, then create a profile from that result.

In either of the patterns explained above and shown in FIG. 5 and FIG. 6, it is assumed that only one user is logged in, however, when the operation system is set, for example, so that it is possible for there to be a plural ity of users logged in to one computer, and when operations are performed at the same time by a plurality of users, it is possible to set that the process of creating user profiles and the process of using those user profiles to perform unauthorized-operation judgment be performed at the same time for a plurality of users. For a node profile as well, it is possible to perform the process of creating the profile and using that profile to perform unauthorized-operation judgment at the same time for all operations by each of the respective users.

The flow of the unauthorized-operation-judgment system of this invention will be explained using the flowchart shown in FIG. 7. The flow explained below is just an example of the processing flow of the unauthorized-operation judgment system of this invention, and the invention is not limited to the order of creating profiles and calculating scores, whether or not to create node profiles for operations by identified users, etc., as described in the example of flow below.

First, after the power to the computer is turned ON and the unauthorized-operation-judgment system is started up, a node profile is created for the operat ion of start ing the computer (S01). The created node profile is stored in the node-file-state table (S02).

Next, when starting up the computer, the operation related to turning the power ON is compared with the node profile related to turning the power ON to the computer that is stored in the node-prof ile-state table, deviation calculation is executed (S03), and a score is calculated (S04). The calculated score is compared with a preset reference value (S05), and when the score is greater than the reference value there is a high possibility that the operation is an unauthorized operation and processing is executed to stop the operation, or more specifically, the process for starting the computer is stopped (S06).

On the other hand, when the score is less than the reference value, the operation is received and continues as is. When login for a certain user is received (S07), the user ID for the logged-in user is identified (S08). A user profile is created for the user that performed the login (S09), and the created user profile is stored in a user-profile-state table that corresponds to the user ID of that user (S10).

Next, when that user logs in, the operation of the login of that user is compared with a user profile related to login that is stored in the user-profile-state table that corresponds to that user, deviation calculation is executed (S11), and a score is calculated (S12). The calculated score is compared with a preset reference value (S13), and when the score is greater than the reference value there is a high possibility that the operation is an unauthorized operation, and processing is executed to stop the operation, or more specifically, the process of receiving the login is stopped (S14).

On the other hand, when the score is less than the reference value, the operation is received and continues as is. The logged-in user executes processing such as various applications, and the unauthorized-operation-judgment system detects activation of a new application by monitoring writing to the IDE (S15). Monitoring continues when there is no writing to the IDE, and when writing to the IDE is detected, a user profile related to the process executed by the written data is created (S16), and the created user profile is stored in a user-prof ile-state table that corresponds to the user ID of that user (S17). Activation of an application is detected by monitoring writing to the IDE, however, it is also possible to monitor the memory space that is used as the work area for an application, and detect when a new operation is performed.

Next, after that user logs in, an operation related to the start up of an application or the like performed by that user is compared with a user profile related to startup of an application that is stored in the user-profile-state table corresponding to that user, deviation calculation is executed (S18), and a score is calculated (S19). The calculated score is compared with a preset reference value (S20), and when the score is greater than the reference value there is a high possibility that the operation is an unauthorized operation, and a process for stopping the operation, or more specifically, a process of interrupting the application is executed (S21). On the other hand, when the score is less than the reference value, monitoring of writing to the IDE continues (S15).

## Claims

1. An unauthorized-operation-judgement system for determining whether an operation received by a computer is an unauthorized operation, and comprising:
an operation-receiving means for receiving instruction data for executing said operation;
a first profile-creation means for creating a first profile from said instruction data related to the operation for which instruction data was received by said computer;
a first profile-storage means for storing said first profile that was created by said first profile-creation means;
a second profile-creation means for identifying the user that executed said operation by said instruction data, and creating a second profile related to the operation executed by said user;
a second profile-storage means for storing, according to user, said second profiles created by said second profile-creation means; and
a score-calculation means for comparing said instruction data with at least one profile that is stored in said first profile-storage means or in said second profile-storage means, and calculating a score for determining whether said operation is an unauthorized operation.

2. The unauthorized-operation-judgment system of claim 1 further comprising:
a first log-data-storage means for storing log data of said computer; and
a second log-data-storage means for storing log data according to user of said computer; wherein
said first profile-creation means references said first log-data-storage means when creating said first profile; and
said second profile-creation means references said second log-data-storage means when creating said second profile.

3. The unauthorized-operation-judgment system of claim 1 further comprising:
a login-detect ion means for executing a process for detect ing whether a certain user is logged into said computer; wherein
when said login-detection means detects that a certain user is logged in, said second profile-creation means creates a second profile related to said user.

4. The unauthorized-operation-judgment system of claim 3 wherein;
said login-detection means executes detection processing at specified intervals while said computer is in operation.

5. The unauthorized-operation-judgment system of claim 3 wherein;
when said login-detection means does not detect that a certain user is logged in even though detection processing is executed, said first profile-creation means creates a first profile related to said computer.

6. The unauthorized-operation-judgment system of claim 5 wherein;
said login-detection means executes detection processing at specified intervals while said computer is in operation.

7. The unauthorized-operation-judgment system of claim 1 further comprising:
a third profile-creation means for creating a third profile related to an operation executed by a user that is identified as a first-time user, when the user executing said operation by said instruction data is identified as a first-time user operating said computer for the first time; and
a third profile-storage means for storing third profiles that are created by said third profile-creation means; wherein
said score-calculation means uses at least one profile that is stored in said third profile-storage means instead of said second profile-storage means to determine whether said operation is an unauthorized operation.

8. The unauthorized-operation-judgment system of claim 7 further comprising:
an operation-record-storage means for storing, according to user, totals related to at least one of the following: number of logins to said computer, operation time that said computer has been operated, or number of days said computer has been operated; and
a first-time-user-judgment means for referencing said operation-record-storage means, and determining that the user executing said operation is a first-time user using said computer for the first time when said totals do not satisfy preset reference values; and wherein
said third profile-creation means creates a third profile for an operation executed by a user that is determined to be a first-time user by said first-time-user-judgment means; and
said score-calculation means uses at least one profile stored in said third profile-storage means when said first-time-user-judgment means determines that a user is a first-time user, to determine whether said operation is an unauthorized operation.

9. The unauthorized-operation-judgment system of any one of the claims 1 to 8 wherein
said score calculation means calculates a score by calculating the deviation between said instruction data and data that is stored in said profiles.

10. The unauthorized-operation-judgment system of any one of the claims 1 to 8 further comprising:
an operation-stopping means for executing a process for stopping said operation when said score value exceeds a reference value.

11. The unauthorized-operation-judgment system of any one of the claims 1 to 8 further comprising:
a warning-process means for executing a process for displaying a warning on the operation screen of said computer, or generating a warning alarm on said computer, when said score exceeds a reference value.

12. The unauthorized-operation-judgment system of any one of the claims 1 to 8 further comprising:
a warning-notification-transmission means for sending a notification warning to the administration server operated by the administrator of said computer that there is a possibility of an unauthorized operation, when said score exceeds a reference value.

13. An unauthorized-operation-judgment method for determining whether an operation received by a computer is an unauthorized operation, and comprising:
a step whereby said computer receives instruction data to execute said operation;
a step whereby said computer creates a first profile related to the operation for which instruction data was received by said computer, and stores said first profile in a first profile-storage unit;
a step whereby said computer identifies the user that executed said operation by said instruction data, creates a second profile related to the operation executed by said user and stores said profile in a second profile-storage unit; and
a step whereby said computer compares said instruction data with at least one profile that is stored in said first profile-storage unit or in said second profile-storage unit, and calculates a score for determining whether said operation is an unauthorized operation.

14. An unauthorized-operation-judgment method for determining whether an operation received by a computer is an unauthorized operation, and comprising:
a step whereby said computer receives instruction data for executing said operation;
a step whereby said computer creates a first profile related to the operation for which said instruction data is received by said computer, and sends said profile to a first profile-storage unit;
a step whereby said computer identifies the user that executed said operation by said instruction data, creates a second profile related to the operation executed by said user, and sends said profile to a second profile-storage unit; and
a step whereby said computer obtains at least one profile from said first profile-storage unit or said second profile-storage unit, compares said instruction data with said profile(s), and calculates a score for determining whether said operation is an unauthorized operation.

15. An unauthorized-operation-judgment program for determining whether an operation received by a computer is an unauthorized operation, and causes said computer to execute:
a step of receiving instruction data for executing said operation;
a step of creating a first profile related to the operation for which instruction data was received by said computer, and storing said first profile in a first profile-storage unit;
a step of identifying the user that executed said operation by said instruction data, creating a second profile related to the operation executed by said user and storing said profile in a second profile-storage unit; and
a step of comparing said instruction data with at least one profile that is stored in said first profile-storage unit or in said second profile-storage unit, and calculating a score for determining whether said operation is an unauthorized operation.

16. An unauthorized-operation-judgment program for determining whether an operation received by a computer is an unauthorized operation, and causes said computer to execute:
a step of receiving instruction data for executing said operation;
a step of creating a first profile related to the operation for which said instruction data is received by said computer, and sending said profile to a first profile-storage unit;
a step of identifying the user that executed said operation by said instruction data, creating a second profile related to the operation executed by said user, and sending said profile to a second profile-storage unit; and
a step of obtaining at least one profile from said first profile-storage unit or said second profile-storage unit, comparing said instruction data with said profile(s), and calculating a score for determining whether said operation is an unauthorized operation.
